# EUROPEAN PATENT SPECIFICATION

(11) **EP 3 239 406 B1**
(45) Date of publication and mention of the grant of the patent: **02.01.2019**
(21) Application number: 17382209.9
(22) Date of filing: 19.04.2017
(51) Int. Cl.: E02D 27/42, F03D 13/20, E04H 12/10

(54) **OFFSHORE WIND TURBINE SUPPORT STRUCTURE**
STÜTZSTRUKTUR FÜR OFFSHORE-WINDTURBINE
STRUCTURE DE SUPPORT D'ÉOLIENNE EN MER

(30) Priority: 26.04.2016 ES 201630528
(43) Date of publication of application: 01.11.2017
(73) Proprietor: Navantia S.A., 28006 Madrid (ES)
(72) Inventor: Martinez Cimadevila, Andrés Avelino, 28006 Madrid (ES)
(74) Representative: Elzaburu S.L.P.

(56) References cited:
- DE-U1-202012 009 678
- US-A1- 2015 354 203

## Description

### Field of the invention

The present invention refers to a support structure for offshore wind turbines. Said support structure is the type that comprises a lattice structure that rests on the sea floor, and a transition piece for transmitting the loads of the wind turbine and the tower to the lattice structure.

### Background of the invention

The design and manufacturing of offshore wind turbines (OWT) is oriented towards obtaining a system having the required structural features in an environment with severe environmental conditions at the lowest cost possible.

A support structure of an offshore wind turbine comprises at least the following elements:
- a transition piece (TP) that integrates the offshore wind turbine and its tower on the support structure, and
- a lattice structure (jacket structure) that has its leg pilings driven into the seabed, which support said transition piece.

The configuration of the currently existing transition pieces does not, in general, facilitate serial production, with high productivity parameters and a simple final assembly. Examples of prior art support systems can be found in DE 20 2012 009678 U1 and US 2015/354203 A1.

### Description of the invention

The invention provides a modular configuration of the transition piece, which is considered the core of the structural system, together with a harmonization of the layout of the lattice, depending on the dimensions of the transition piece and enabling an optimized system, measuring the optimization level by its final cost and the structural reliability of the resulting system. The invention proposes a modular design and manufacturing system together with the use of automatic production systems.

On the other hand, due to the modularity of the system, the transition piece can be integrally manufactured automatically, starting from the use of flat manufacturing panels, enabling high productivity parameters.

For the case of the lattice (jacket) structure, a serial production scheme is also proposed using the lowest number possible of equal components, vertical legs (0º inclination angle) and automatic manufacturing production methods: orbital and robotised knot welding.

It is considered that the resulting product attains the objective of cost effectiveness, together with suitable structural features.

The invention is characterised in that the transition piece comprises:
- A bottom cover that can be reinforced by a grid system.
- A cylindrical piece configured to be joined to the wind turbine tower, for example, with a flange, and that gives continuity to said tower, which is located centred on the transition piece. The cylindrical piece transmits its loads to the rest of the elements of the transition piece, has the same diameter as the tower, and is integrated into the rest of the support structure.
- Some radial partitions, preferably eight, located on the bottom cover and perpendicular to it, joined to the cylindrical piece and extended up to the outer edge of the bottom cover. The radial elements provide a suitable load distribution coming from the offshore wind turbine tower.
- A top cover parallel to the bottom cover and located on the radial partitions. The top cover, together with the rest of the elements, creates a rigid assembly en every direction, torsional stiffness included.
- An outer shell assembly that is located on the outer contour of the transition piece, which is extended between the bottom cover and the top cover, and that is placed perpendicularly to them, collaborating to obtain a closed rigid assembly with the rest of the elements.

In addition, the bottom cover, the radial partitions, the outer shell assembly, and the top cover, are shaped starting from the flat elements and, therefore, the transition piece is configured like a group of flat panels.

Therefore, the transition piece is shaped like a group of flat elements (except the cylindrical pieces), enabling easy manufacturing (automatic) and likewise easy final assembling, together with some very reliable structural features resulting in a cost effective product.

### Description of the drawings

To complete the description and for the purpose of providing better comprehension of the invention, a few figures are provided. Said figures form an integral portion of the description and illustrate an example embodiment of the invention.
Figure 1.- Shows a schematic lateral view of an embodiment of a support structure of an offshore tower according to the invention.

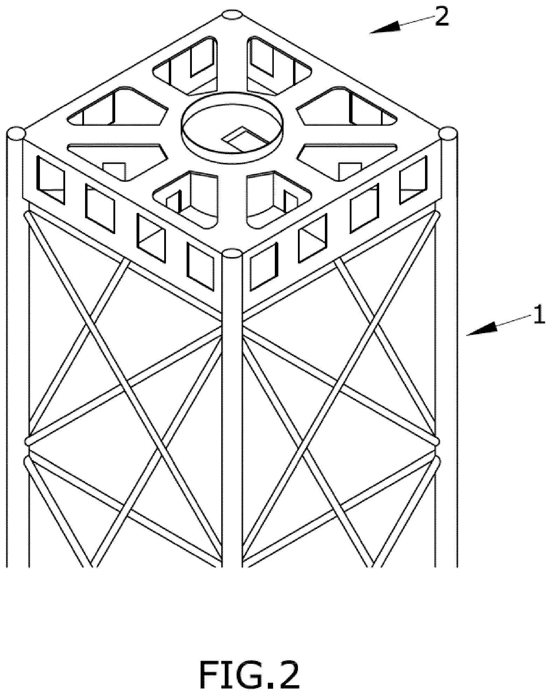

Figure 2.- Shows a schematic view in perspective of the embodiment corresponding to Figure 1, that shows an embodiment of the transition piece.
Figure 3.- Shows a schematic view in perspective of the embodiment corresponding to the transition piece of Figure 2.
Figure 4.- Shows a schematic view in perspective of an embodiment of the bottom cover in which said bottom cover is shaped by a flat element, specifically, a plate reinforced by a grid.
Figure 5.- Shows a schematic view in perspective of an alternative embodiment of the bottom cover in which said bottom cover is shaped by an assembly of reinforced flat plates.

### Detailed description of the invention

In the embodiment shown in the figures, the planform of the transition piece (2) is square. However, other shapes, for example, an equilateral triangular shape (three leg system), could also be employed.

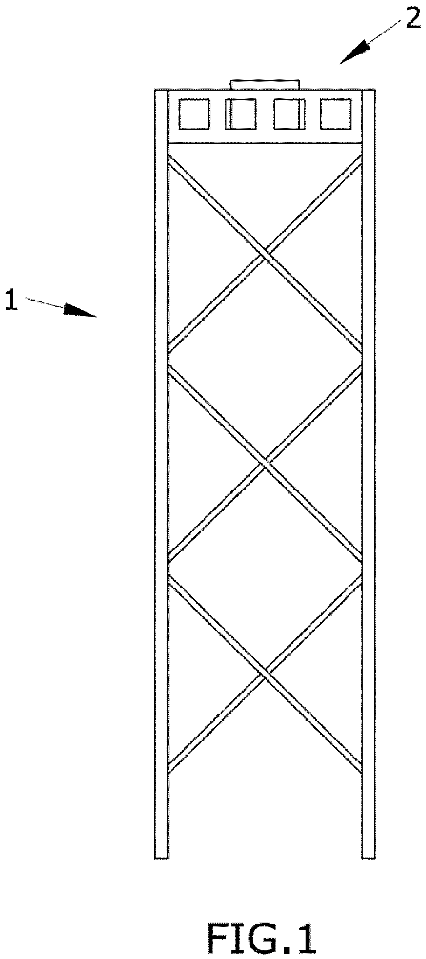

In the embodiment corresponding to Figure 1, the lattice structure (1) (Jacket) has four vertical legs with a 0º angle of inclination where the diagonal pieces are positioned as equally spaced crosspieces to form an X.

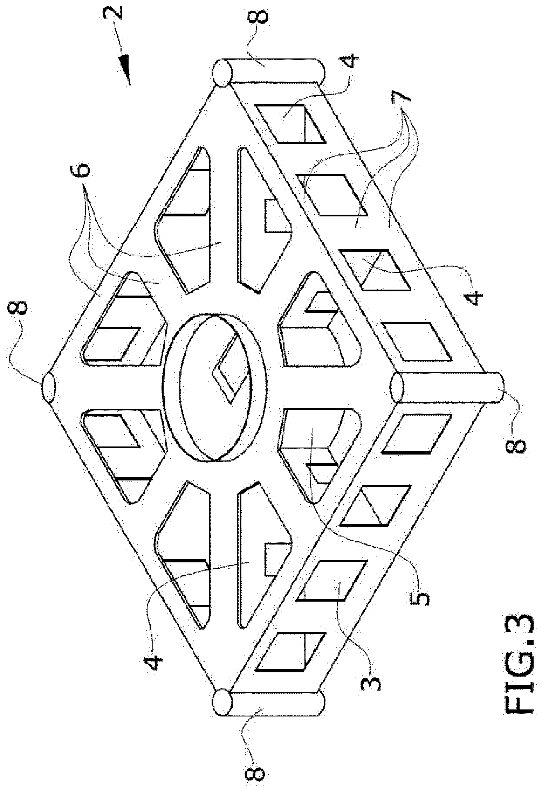

The embodiment of the transition piece (2) displayed in Figure 3 comprises:
- the bottom cover (3),
- the cylindrical piece (5) centred on the bottom cover (3), that is, in the centre of the transition piece (2),
- eight radial partitions (4)
- the outer shell assembly (7) located on the outer assembly of the transition piece (2) and that is pleaced vertically
- the top cover (6) placed on the radial partitions (4) and on the outer shell assembly (7)

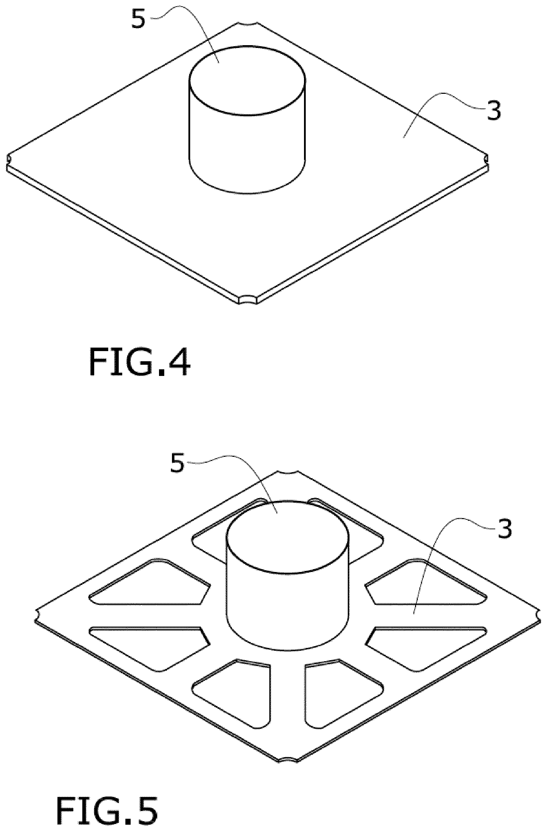

Both the radial partitions (4), the outer shell assembly (7), and the top cover (6) are shaped by flat panels that are arranged joined together, while the bottom cover (3) is shaped by a flat element, as displayed in Figure 4. Figure 5 shows an alternative configuration in which the bottom cover (3) is also shaped by flat panels that are arranged joined together.

The configuration from the flat panels that are arranged joined together enable less weight and welding volume than the configuration using a flat element reinforced by a grid system. In the case of the bottom cover (3) in the hollow spaces a grating system would be disposed to enable access to the transition piece (2). The vertical load on the bottom cover (3), in this case, would only correspond to the load caused by the access to the bottom cover.

Likewise, the largest part of the constituent elements are equal to each other, and in a lower number, to the extent possible, in-line with a serial production philosophy.

In addition, the transition piece (2) comprises an extension (8) of the lattice legs that are joined to the corresponding constituent elements of the transition piece. More specifically, the extension (8) of the lattice legs is placed in the confluence of a radial partition (4) with the outer shell assembly (7), specifically, in the confluence of two flat panes of the outer shell assembly (7) and a radial partition (4).

The resulting support structure displayed in Figure 1, that is, the transition piece (2) and lattice structure (1), is especially suitable for offshore wind turbine elements ranging from 5 to 8 MW and medium to deep depths (35-55 m).

Likewise, it is adaptable to different piling: piles or suction buckets. It also has the advantage that the operations, hoisting and installation, are facilitated with a simple and efficient system of hoisting elements comprising eyebolts integrated in the vertical partitions of the transition piece (2).

## Claims

1. Offshore wind turbine support structure that comprises:
- a lattice structure (1) configured to have its leg pilings in the seabed, and
- a transition piece (2), configured to be in contact with the offshore wind turbine tower and to be supported on the lattice structure (1),
wherein the transition piece comprises:
- a bottom cover (3),
- a cylindrical piece (5) configured to be joined to the tower of the wind turbine and the bottom base of which is located on the bottom cover (3) and centred on it (3),
- some radial partitions (4), located on the bottom cover (3) and perpendicular to it (3), joined to the cylindrical piece (5) and extended up to the outer edge of the bottom cover (3),
- a top cover (6) parallel to the bottom cover (3) and located on the radial partitions (3).
- an outer shell assembly (7) that circumvents the the free ends of the radial partitions (4), that are extended between the bottom cover (3) and the top cover (6) and that are placed perpendicularly to them (3, 6) and on their outer contour (3, 6).

2. Offshore wind turbine support structure, according to claim 1, **characterised in that** the lattice structure (1) comprises legs parallel to each other configured to be vertically located on the ground.

3. Offshore wind turbine support structure, according to any of the preceding claims, **characterised in that** the transition piece (2) comprises an extension (8) of the legs of the lattice, which are configured to be joined to the transition piece (2).

4. Offshore wind turbine support structure, according to claim 3, **characterised in that** the extension (8) of the legs of the lattice are located in the confluence of two flat panels of the outer shell assembly (7) and a radial partition (4).

5. Offshore wind turbine support structure, according to any of the previous claims, **characterised in that** the bottom cover (3) is shaped by a flat panel.

6. Offshore wind turbine support structure, according to claim 5, **characterised in that** the flat panel consists in a plate reinforced by a grid.

7. Offshore wind turbine support structure, according to any of the previous claims 1 to 6, **characterised in that** the bottom cover (3) is shaped by flat panels that are placed joined together.

8. Offshore wind turbine support structure, according to any of the previous claims, **characterised in that** the radial partitions (4), the outer shell assembly (7) and the top cover (6) are shaped by flat panels that are placed joined together.

9. Offshore wind turbine support structure, according to any of the previous claims, **characterised in that** the cylindrical piece (5) is configured to have a diameter coinciding with the diameter of the wind turbine tower.

## Patentansprüche

1. Stützstruktur für Offshore-Windturbine, die Folgendes umfasst:
- eine Gitterstruktur (1), die so ausgebildet ist, dass ihre Pfähle auf dem Meeresboden stehen, und
- ein Übergangsteil (2), das so ausgebildet ist, dass es mit dem Turm der Offshore-Windturbine in Kontakt steht und von der Gitterstruktur (1) gestützt wird,
wobei das Übergangsteil Folgendes umfasst:
- eine untere Abdeckung (3),
- ein zylindrisches Teil (5), das ausgebildet ist, um mit dem Turm der Windturbine verbunden zu werden, und dessen Grundplatte auf der unteren Abdeckung (3) angeordnet und darauf (3) zentriert ist,
- einige radiale Trennstege (4), die auf der unteren Abdeckung (3) senkrecht zu ihr (3) angeordnet und mit dem zylindrischen Teil (5) verbunden sind und sich bis zum äußeren Rand der unteren Abdeckung (3) erstrecken,
- eine zur unteren Abdeckung (3) parallele obere Abdeckung (6), die auf den radialen Trennstegen (3) angeordnet ist,
- ein Außengehäuse (7), das die freien Enden der radialen Trennstege (4) umgibt, die sich zwischen der unteren Abdeckung (3) und der oberen Abdeckung (6) erstrecken und auf deren Außenkontur (3, 6) senkrecht zu ihnen (3, 6) angeordnet sind.

2. Stützstruktur für Offshore-Windturbine nach Anspruch 1, **dadurch gekennzeichnet, dass** die Gitterstruktur (1) parallel zueinander verlaufende Beine umfasst, die derart ausgebildet sind, dass sie senkrecht auf dem Boden stehen.

3. Stützstruktur für Offshore-Windturbine nach einem der vorhergehenden Ansprüche, **dadurch gekennzeichnet, dass** das Übergangsteil (2) eine Verlängerung (8) der Beine des Gitters umfasst, die ausgebildet ist, um mit dem Übergangsteil (2) verbunden zu werden.

4. Stützstruktur für Offshore-Windturbine nach Anspruch 3, **dadurch gekennzeichnet, dass** die Verlängerung (8) der Beine des Gitters sich an der Stelle befindet, wo zwei flache Paneele des Außengehäuses (7) und ein radialer Trennsteg (4) zusammentreffen.

5. Stützstruktur für Offshore-Windturbine nach einem der vorhergehenden Ansprüche, **dadurch gekennzeichnet, dass** die untere Abdeckung (3) von einem flachen Paneel gebildet wird.

6. Stützstruktur für Offshore-Windturbine nach Anspruch 5, **dadurch gekennzeichnet, dass** das flache Paneel aus einer durch ein Gitter verstärkten Platte besteht.

7. Stützstruktur für Offshore-Windturbine nach einem der vorhergehenden Ansprüche 1 bis 6, **dadurch gekennzeichnet, dass** die untere Abdeckung (3) von flachen Paneelen gebildet wird, die miteinander verbunden platziert werden.

8. Stützstruktur für Offshore-Windturbine nach einem der vorhergehenden Ansprüche, **dadurch gekennzeichnet, dass** die radialen Trennstege (4), das Außengehäuse (7) und die obere Abdeckung (6) von flachen Paneelen gebildet werden, die miteinander verbunden platziert werden.

9. Stützstruktur für Offshore-Windturbine nach einem der vorhergehenden Ansprüche, **dadurch gekennzeichnet, dass** das zylindrische Teil (5) so ausgebildet ist, dass sein Durchmesser mit dem Durchmesser des Windturbinenturms übereinstimmt.

## Revendications

1. Structure de support d'éolienne en mer qui comprend :
- un treillis (1) configuré pour que ses jambes à empilement soient dans le fond marin, et
- une pièce de transition (2), configurée pour être en contact avec la tour d'éolienne en mer et pour reposer sur le treillis (1),
dans laquelle la pièce de transition comprend :
- un couvercle inférieur (3),
- une pièce cylindrique (5) configurée pour être assemblée à la tour de l'éolienne et dont la base inférieure est située sur le couvercle inférieur (3) et centrée sur lui (3),
- quelques cloisons radiales (4), situées sur le couvercle inférieur (3) et perpendiculaires à lui (3), assemblées à la pièce cylindrique (5) et s'étendant vers le haut jusqu'au bord externe du couvercle inférieur (3),
- un couvercle supérieur (6) parallèle au couvercle inférieur (3) et situé sur les cloisons radiales (3).
- une coque d'assemblage externe (7) qui contourne les extrémités libres des cloisons radiales (4), qui s'étendent entre le couvercle inférieur (3) et le couvercle supérieur (6) et qui sont placées perpendiculairement à eux (3, 6) et sur leur contour externe (3, 6).

2. Structure de support d'éolienne en mer, selon la revendication 1, **caractérisée en ce que** le treillis (1) comprend des jambes parallèles l'une à l'autre configurées pour être placées verticalement sur le sol.

3. Structure de support d'éolienne en mer, selon l'une quelconque des revendications précédentes, **caractérisée en ce que** la pièce de transition (2) comprend une extension (8) des jambes du treillis, qui sont configurées pour être assemblées à la pièce de transition (2).

4. Structure de support d'éolienne en mer, selon la revendication 3, **caractérisée en ce que** l'extension (8) des jambes du treillis est située à la confluence de deux panneaux plats de la coque d'assemblage externe (7) et d'une cloison radiale (4).

5. Structure de support d'éolienne en mer, selon l'une quelconque des revendications précédentes, **caractérisée en ce que** le couvercle inférieur (3) est formé par un panneau plat.

6. Structure de support d'éolienne en mer, selon la revendication 5, **caractérisée en ce que** le panneau plat se compose d'une plaque renforcée par une grille.

7. Structure de support d'éolienne en mer, selon l'une quelconque des revendications précédentes 1 à 6, **caractérisée en ce que** le couvercle inférieur (3) est formé par des panneaux plats qui sont assemblés ensemble.

8. Structure de support d'éolienne en mer, selon l'une quelconque des revendications précédentes, **caractérisée en ce que** les cloisons radiales (4), la coque d'assemblage externe (7) et le couvercle supérieur (6) sont formés par des panneaux plats qui sont assemblés ensemble.

9. Structure de support d'éolienne en mer, selon l'une quelconque des revendications précédentes, **caractérisée en ce que** la pièce cylindrique (5) est configurée pour avoir un diamètre coïncidant avec le diamètre de la tour d'éolienne.
